Europäisches Patentamt

European Patent Office

Office européen des brevets

(19)

(11) Publication number: **0 231 022 B1**

## EUROPEAN PATENT SPECIFICATION

(12)

(45) Date of publication of patent specification: **15.04.92**   (51) Int. Cl.⁵: **C03B 37/012**

(21) Application number: **87101120.1**

(22) Date of filing: **27.01.87**

(54) **Apparatus for the production of porous preform of optical fiber.**

(30) Priority: **27.01.86 JP 13723/86**

(43) Date of publication of application:
**05.08.87 Bulletin 87/32**

(45) Publication of the grant of the patent:
**15.04.92 Bulletin 92/16**

(84) Designated Contracting States:
**DE ES FR GB IT**

(56) References cited:
**EP-A- 0 054 263        DE-A- 3 420 790**
**FR-A- 2 496 087        FR-A- 2 569 180**
**US-A- 4 162 908        US-A- 4 552 576**

(73) Proprietor: **SUMITOMO ELECTRIC INDUSTRIES LIMITED**
**No. 15, Kitahama 5-chome, Higashi-ku**
**Osaka-shi, Osaka 541(JP)**

(72) Inventor: **Toda, Yuichi c/o Yokohama Works**
**Sumitomo Electric Industries, Ltd. 1, Taya-cho**
**Totsuka-ku Yokohama-shi Kanagawa(JP)**

(74) Representative: **Lehn, Werner, Dipl.-Ing. et al**
**Hoffmann, Eitle & Partner Patentanwälte Arabellastrasse 4**
**W-8000 München 81(DE)**

Rank Xerox (UK) Business Services

## Description

## BACKGROUND OF THE INVENTION

## FIELD OF THE INVENTION

The present invention relates to an apparatus for the production of a porous preform for an optical fiber.

## DESCRIPTION OF THE PRIOR ART

Various methods are known for the production of a porous preform for optical fibers. For example, a vapor axial deposition (VAD) method is such that silicon tetrachloride is added to an oxyhydrogen flame, causing fine particles of silicon dioxide to be deposited on the surface of the starting member in the longitudinal direction thereof so that the porous preform of the optical fiber is prepared. In this method, a burner of multi tube type is used so that silicon tetrachloride and the burning gas can be jetted through tubes of the burner to react them, and additives such as germanium tetrachloride can be jetted from one or more other tubes of the burner so as to produce germanium dioxide, whereby the porous preform is produced having a predetermined spacial density distribution of silicon dioxide and germanium dioxide in the radial direction of the porous preform.

Another method, the so called OVD method, is such that silicon tetrachloride and germanium tetrachloride are supplied to an oxyhydrogen flame in a predetermined mixture ratio and the flame is jetted onto the starting member, whilst moving the starting member in its longitudinal direction. The mixing ratio of silicon tetrachloride and germanium tetrachloride is changed gradually as the process goes on, whereby there is produced the porous preform for the optical fiber having a predetermined radius distribution of germanium dioxide.

As the additives for changing the refraction index of the preform, any other one or more additives may be used in place of germanium tetrachloride.

Although in the above examples additives are mixed for reaction, there is also a known method in which a porous preform of pure silicon dioxide $SiO_2$, is first prepared, thereafter suitable additives may be injected to the porous member at the time of sintering.

When a preform for the optical fiber is produced in such manners as described above, it is the stability and uniformity of the production condition at the time of producing the porous preform that determines the quality of the preform for the optical fiber.

In the VAD method, it is essential to stabilize the spacial density distribution of the additives. If the spacial density distribution changes, the refractive index of the preform is changed and good characteristics of the optical fiber can not be obtained. It is further important that the volume density of the porous glass preform is uniform. If the volume density of the preform is not uniform, the outer diameter of the sintered preform may be changed at the time of sintering. Moreover in the extreme case, the preform may be broken due to the internal thermal stress.

In the OVD method, it is necessary to eliminate time dependent changes of the deposit on the starting member. If there are such changes of the deposit, the refractive index of the porous preform of the optical fiber is undesirably changed. It is also necessary that the volume density of the porous preform is kept uniform. If the volume density is not uniform, the outer diameter of the porous preform may be changed and in the extreme case, the preform may be broken due to the internal thermal stress.

It is also important to keep the volume density distribution uniform for controlling the size of the finished preform when depositing only pure silicon dioxide.

As is apparent from the foregoing, it is essential to deposit the fine particles on the starting member in a stable manner.

The various possible changes such as change of the spacial density distribution of the additives, change of the deposit on the starting member and change of the volume density of the porous glass tend to occur even if the supplying volume of the sintered glass and silicon tetrachloride are strictly controlled. These changes occur as a result of change of the interrelation between the deposit object and flame due to either the fluttering of the flame or the change of the direction of the flame when the glass fine particles are produced by the flame even if the density of the respective gases is kept uniform.

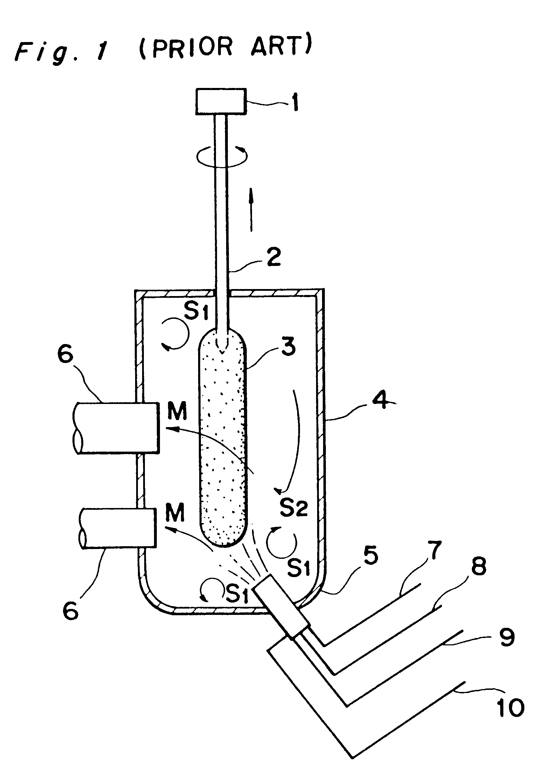

The points mentioned above will be explained in detail with reference to the following example of a VAD method. Fig. 1 shows a schematic diagram of an appatatus for the production of a porous preform for an optical fiber by means of the conventional VAD method.

The burning gas is jetted from a burner 5. Silicon tetrachloride and additives are reacted in the flame, thereby producing fine particles of silicon dioxide. However, since poisonous gases such as hydrogen chloride are simultaneously produced, these reaction must be performed in a sealed muffle furnace 4. In the drawings, reference numeral 1 denotes a rotating chuck which is rotated and elevated upwards, 2 denotes a starting member coupled to the rotatable chuck 1 so that the starting member 2 can be rotated on rotation of the rotatable chuck 1. 3 denotes a porous preform for an optical fiber made of deposited fine particles of silicon dioxide and fine particles of additives. The muffle furnace 4 is substantially a closed structure although there is formed a clearance between the muffle furnace 4 and the starting member 2 so as to allow smooth rotation of the starting member 2. The burner 5 projects into the inside of the muffle furnace 4 and is coupled to a pipe 7 for delivering the combustion gas, an oxygen delivering pipe 8, a silicon cloride gas delivering pipe 9 and an additive gas delivering pipe 10. Reference numeral 6 denotes exhausting ports. When the hydrogen gas and oxygen gas coming from the pipes 7 and 8 are supplied into the interior of the muffle furnace 4 by means of the burner 5, the oxyhydrogen flame occurs in the muffle furnace 4. The resulting mixture produces silicon dioxide by flame hydrolysis reaction. Supplying additives such as germanium tetrachloride gas from the pipe 10 causes germanium dioxide to be produced by reaction with the water vapor. The germanium dioxide and silicon dioxide are mixed and the particles thereof are deposited on the starting member 2. The starting member 2 is rotated and elevated upward and the porous preform 3 for the optical fiber can be produced.

During the process mentioned above, keeping the distribution of silicon dioxide and germanium dioxide constant in the flame enables the distribution of them in the porous preform to be maintained uniform. By sintering the porous preform 3 a transparent preform for the optical fiber can be produced having a desired refractive index. Excessive silicon dioxide and germanium dioxide particles which are not deposited on the starting member 3 are exhausted from the exhausting port 6 as well as hydrogen chloride gas. The gases in the muffle furnace 4 flow mainly along the paths shown by arrows M. However, since the muffle furnace 4 is hermetically sealed, there occur eddy flows as shown by the arrows S1 and S2. The movement of the eddy flows disturb the flow of the flame between the burner 5 and the porous preform 3. This disturbs the correspondence between the density distribution of the fine glass particles in the flame and the density distribution of germanium dioxide against the silicon dioxide in the deposited porous preform 3. The eddy flow as shown at S2 causes the undeposited fine particles of silicon dioxide and germanium dioxide to collect on the inner surface of the wall of the muffle furnace 4. The fine particles thus adhering to the wall of the muffle furnace 4 may separate from the wall and be undesirably applied to the porous preform 3, thereby resulting in an abnormal deformation and an abnormal distribution of the refractive index of the porous preform for the optical fiber in addition to occurrence of partial irregular volume density.

A prior art that is of interest is FR-A-2 496 087 disclosing an apparatus for the production of an optical fiber preform. An elongated vertically disposed reaction container is provided with a starting member depending into said container, the starting member being axially reciprocable along and rotatable about its longitudinal axis. Air enters the reaction container at its upper end via a pipe on one side of the container and directed radially towards the axis of the starting member and leaves via an exit on the opposite side of the container near the lower end of the reaction container via a pipe directed radially away from the axis of the starting member. The temperature of the air entering the container is maintained lower than that of the gas in the container and the resulting higher density of the incoming air causes it to sink downwardly to said exit.

A further prior art for producing an optical fiber preform is that disclosed in DE-A1-3420 790 in which a starting member depends into a reaction chamber, the starting member being reciprocable along and rotatable about its longitudinnal axis. Mounted on a side wall of the reaction chamber is an inlet comprising a mixing device that receives all the necessary glass forming components for the process, for example $SiCl_4$ plus $O_2$ and $GeCl_4$ plus $O_2$. Via a heater the mixing device is also supplied with an inert gas, for example Argon or Helium. The resulting heated mixture exits from an opening in a wall of the reaction chamber which is shown in Fig. 1 of this prior art as resulting in a gas flow across only part of the reaction chamber from one side to the other, there being corners in the reaction chamber where eddy flows can occur in the manner indicated at S1 in Fig. 1 of this application.

## SUMMARY OF THE INVENTION

An essential object of the present invention is to provide an apparatus for the production of a porous preform for optical fibers in which the density distribution of the fine glass particles of the porous preform deposited on the starting member can exactly correspond to the density distrituion of the fine glass particles contained in the flame of the burner.

In order to accomplish this object of the present invention as set out above an apparatus for the production of a porous optical fiber preform is provided as defined in the accompanying Claim 1. The precharacterizing part of this claim is based on the prior art described in connection with figure 1.

## BRIEF EXPLANATION OF THE DRAWINGS

Fig. 1 is a schematic diagram showing an example of a conventional apparatus for producing a porous optical fiber preform

Fig. 2 is a schematic diagram showing an embodiment of an apparatus for producing a porous optical fiber preform according to the present invention, and

Fig. 3 is a schematic diagram showing another embodiment of the apparatus for producing a porous optical fiber preform according to the present invention.

## DETAILED DESCRIPTION OF THE PREFERRED EMBODIMENT

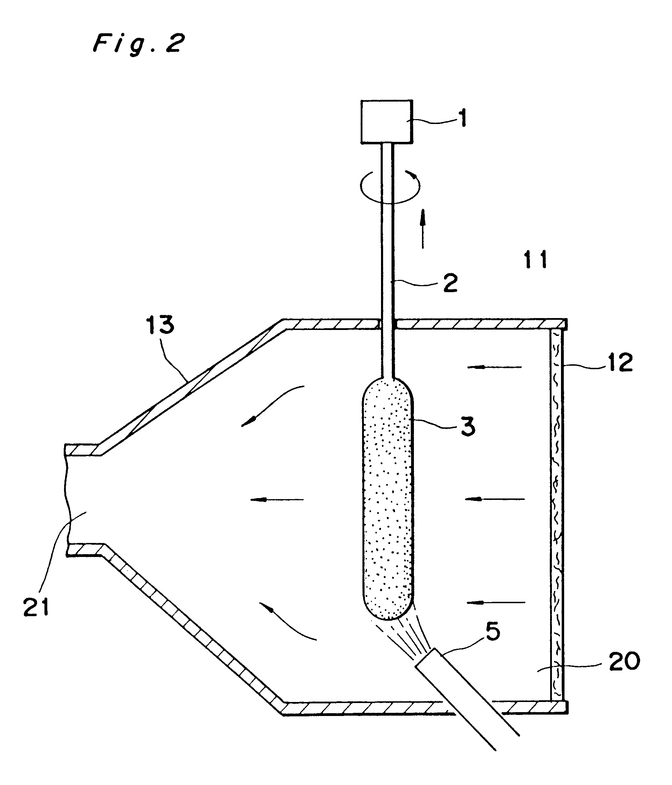

Referring to Fig. 2 there is shown an example of the apparatus for producing a porous optical fiber preform according to the present invention, in which the VAD method is used. A bar like starting member 2 made of pure quarts is rotatably suspended in the vertical direction in the muffle furnace 11 by a rotatable chuck 1 disposed outside the muffle furnace 11. A porous optical fiber preform 3 is gradually deposited on the starting member 2 upon rotation and lifting motion of the chuck 1. An oxyhydrogen flame burner 5 is positioned below the lower end of the starting member 2 so that the burner 5 supplies the combustion gas containing glass material with a predetermined spatial distribution density, the glass particles being produced in the furnace. Upon supply of glass particles by the burner 5 mentioned above, there is grown the porous optical fiber preform 3 on the starting member 2 in the axial direction thereof.

The distribution of the glass particles with respect to the radial direction of the starting member 2 corresponds to the spatial distribution density of the glass particles contained in the combustion gas. The muffle furnace 11 has its one side in the form of an opening 20 closed by a filter 12. The other side of the furnace 11, opposite to said opening 20, has another opening 21.

Air or nitrogen gas in a rectified flow in the direction shown by the arrows is supplied to the interior of the muffle furnace 11 through the filter 12 by which dust contained in the air or nitrogen gas is removed. The interior of the muffle furnace 11 and the starting member 2 and the porous optical fiber preform 3 deposited on the end portion of the starting member 2 can be kept in a uniform gas flow. Thus the flame of the combustion gas containing the glass particles jetted from the burner 5 can be stabilized and the porous optical fiber preform 3 with the desired component distribution can be deposited on the end of the starting member 2. The glass particles which are not deposited on the porous optical fiber preform 3 flow as exhausting gas with the reaction gas and are exhausted via the opening 21 and a duct 13 formed integrally with the muffle furnace 11.

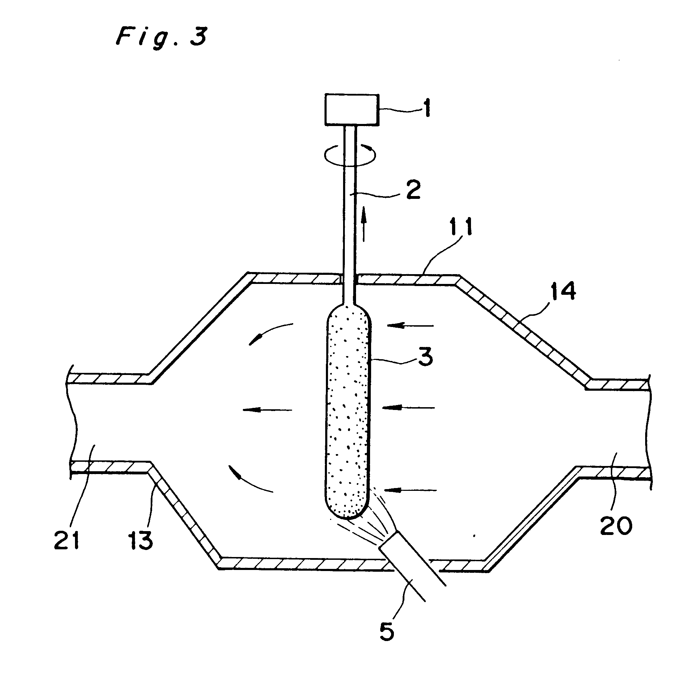

Referring to Fig. 3 showing another embodiment of the present invention, air or nitrogen gas is cleaned by a high efficiency filter (not shown) and is fed in the muffle furnace 11 in a uniform gas flow from a duct 14 of the muffle furnace 11 having an opening 20 at one side and the reaction gas is exhausted through another duct 13 disposed at a position opposite to the duct 14. The manner of growth of the porous optical fiber preform 3 is similar to that described with respect to Fig. 2.

Although the embodiment of the apparatus for the production of the porous optical fiber preform is explained with reference to the VAD method, the porous optical fiber preform having the desired component distribution can be deposited in the radial direction and longitudinal direction using the external VAD method. In this case a methane burner may be used in place of the oxyhydrogen burner 5.

## Claims

1. An apparatus for the production of a porous optical fiber preform (3) comprising:

   a reaction container (11);

   means for generating a gas flow in said reaction container; a starting member (2) having a bar-like shape and supported in the reaction container for reciprocal motion along the longitudinal axis of the starting member;

   means (1) for rotating the starting member (2) about its longitudinal axis;

   one or more burners (5) disposed in the reaction container (11) so as to oppose said starting member (2) for generating glass particles and to thereby deposit glass particles on the starting member (2);

   **characterized in that**

   the reaction container (11) and the means for generating a gas flow therein are such that there is a gas flow across substantially the whole of the reaction container (11) from one side to the other in a direction transverse to that in which the starting member (2) is reciprocated, so as to provide a uniform straight gas flow to said starting member (2).

2. The apparatus according to Claim 1, wherein said container (11) comprises a pair of openings (20, 21), one opening (20) facing one side of the starting member and the other opening (21) facing the opposite side of the starting member (2), one of the openings (20) being provided for introducing air or nitrogen gas into the reaction container (11) and the other opening (21) being provided for exhausting air or gas from the container.

3. The apparatus according to Claim 2, wherein said one of the openings (20) is closed by a filter (12).

4. The apparatus according to Claim 2, wherein said other opening (21) is open to air.

**Revendications**

1. Appareil de production d'une préforme poreuse (3) de fibre optique comprenant :
   un récipient de réaction (11) ;
   des moyens de création d'un courant gazeux dans ledit récipient de réaction ;
   une amorce (2) ayant la forme d'une barre et étant soutenue dans le récipient de réaction en vue d'un déplacement alternatif le long de l'axe longitudinal de l'amorce ;
   des moyens (1) de rotation de l'amorce (2) autour de son axe longitudinal ;
   un ou plusieurs chalumeaux (5) disposés dans le récipient de réaction (11) de façon à se trouver opposés à ladite amorce (2) pour former des particules de verre et à déposer ainsi des particules de verres sur l'amorce (2) ; caractérisé en ce que le récipient de réaction (11) et les moyens de création d'un courant gazeux à l'intérieur de ce récipient sont tels qu'il existe un courant gazeux traversant sensiblement l'ensemble du récipient de réaction (11) d'un côté à l'autre, dans une direction transversale par rapport à celle dans laquelle se déplace l'amorce (2) d'un mouvement alternatif, de façon à fournir un courant gazeux droit uniforme à ladite amorce (2).

2. Appareil selon la revendication 1, dans lequel ledit récipient (11) comprend un couple d'ouvertures (20, 21), une ouverture (20) faisant face à un côté de l'amorce et l'autre ouverture (21) faisant face au côté opposé de l'amorce (2), une des ouvertures (20) étant ménagée pour l'introduction d'air ou d'azote gazeux dans le récipient de réaction (11) et l'autre ouverture (21) étant ménagée pour l'évacuation de l'air ou de gaz du récipient.

3. Appareil selon la revendication 2, dans lequel ladite une ouverture (20) est fermée par un filtre (12).

4. Appareil selon la revendication 2, dans lequel ladite autre ouverture (21) est ouverte à l'air.

**Patentansprüche**

1. Vorrichtung für die Herstellung einer porösen Vorform (3) einer optischen Faser, umfassend:
   - einen Reaktionsbehälter (11);
   - eine Einrichtung zum Erzeugen eines Gasflusses in dem Reaktionsbehälter;
   - ein Ausgangsglied (2) mit einer stabähnlichen Form, das in dem Reaktionsbehälter für eine Hin- und Herbewegung entlang der Längsachse des Ausgangsgliedes gelagert ist;
   - eine Einrichtung (1) zum Drehen des Ausgangsgliedes (2) um seine Längsachse;
   - einen oder mehrere Brenner (5), die in dem Reaktionsbehälter (11) derart angeordnet sind, daß sie dem Ausgangsglied (2) gegenüberliegen, um Glaspartikel zu erzeugen und um dadurch Glaspartikel an dem Ausgangsglied (2) abzulagern;
   dadurch **gekennzeichnet,** daß
   der Reaktionsbehälter (11) und die Einrichtung zum Erzeugen eines Gasflusses darin derart sind, daß ein Gasfluß über im wesentlichen den gesamten Reaktionsbehälter (11) von einer Seite zur anderen Seite in einer zur Hin- und Herbewegungsrichtung des Ausgangsgliedes (2) senkrechten Richtung existiert, so daß das Ausgangsglied (2) einem gleichmäßigen, geraden Gasfluß ausgesetzt ist.

2. Vorrichtung nach Anspruch 1, dadurch **gekennzeichnet**, daß
   der Behälter (11) zwei Öffnungen (20, 21) umfaßt, wobei eine Öffnung (20) einer Seite des Ausgangsgliedes gegenüberliegt und die andere Öffnung (21) der anderen Seite des Ausgangsgliedes (2) gegenüberliegt, wobei eine der Öffnungen (20) dazu vorgesehen ist, dem Reaktionsbehälter (11) Luft oder Stickstoffgas zuzuführen, und die andere Öffnung (21) dazu vorgesehen ist, Luft oder Gas aus dem Behälter abzuführen.

3. Vorrichtung nach Anspruch 2, dadurch **gekennzeichnet**, daß
   eine der Öffnungen (20) durch einen Filter (12) verschlossen ist.

4. Vorrichtung nach Anspruch 2, dadurch **gekennzeichnet**, daß
   die andere Öffnung (21) zur Luft offen ist.

Fig. 1 (PRIOR ART)

Fig. 2

Fig. 3